# EUROPEAN PATENT SPECIFICATION

(11) **EP 1 449 436 B1**
(45) Date of publication and mention of the grant of the patent: **12.08.2009**
(21) Application number: 04075481.4
(22) Date of filing: 13.02.2004
(51) Int. Cl.: A01N 63/00, C02F 3/34

(54) **Bioconditioner**
Biologisches Konditionierungsmittel
Agent de conditionnement biologique

(30) Priority: 14.02.2003 NL 1022689
(43) Date of publication of application: 25.08.2004
(73) Proprietor: Reno Biochemicals B.V., 8445 PM Heerenveen (NL)
(72) Inventor: Jansen, Gijsbert Johan, 9061 BJ Gytsjerk (NL); Stege, Rene Hermanus Josef, 9084 AP Goutum (NL)
(74) Representative: Prins, Adrianus Willem

(56) References cited:
- WO-A-93/09671
- WO-A-94/28112
- WO-A-02/060250
- DE-A- 19 755 319
- US-A- 5 360 517
- DATABASE BIOSIS [Online] BIOSCIENCES INFORMATION SERVICE, PHILADELPHIA, PA, US; 1991, KOSTMAN J R ET AL: "INFECTIONS WITH CHRYSEOMONAS-LUTEOLA CDC GROUP VE-1 AND FLAVIMONAS-ORYZIHABITANS CDC GROUP VE-2 IN NEUROSURGICAL PATIENTS" XP002258770 Database accession no. PREV199192113391 & REVIEWS OF INFECTIOUS DISEASES, vol. 13, no. 2, 1991, pages 233-236, ISSN: 0162-0886

## Description

The invention relates to the use of a waterbed conditioner by means of which the water quality of water present in a waterbed mattress can be enhanced. The invention particularly relates to the use of a biological conditioner, or bioconditioner, by means of which the amount of gas and odor-forming bacteria in a waterbed can be reduced.

The waterbed industry forms an industry sector of a considerable size. To date, in the Netherlands alone, about 1 million waterbeds have been sold and the popularity of the waterbed is still increasing.

In practice, it has been found that, with the lapse of time, a considerable number of waterbeds become defective. A common problem relates to a decrease of the quality of the water with which a waterbed mattress, or water mattress, has been filled. Most, if not all, problems concerning the water quality of waterbeds can be traced back to microbial activity. The virtually still, heated water in a water mattress offers favorable conditions for the growth of microorganisms such as bacteria. Research shows that in so-called 'problem waterbeds', which are often characterized by gas and/or odor formation, higher concentrations of microorganisms, such as bacteria, are found than in so-called 'trouble-free' waterbeds. Some of these bacteria produce the gas hydrogen sulfide (H₂S). H₂S smells of putrid eggs and can penetrate the vinyl mattress so that an unpleasant odor spreads through the bedroom, and in many cases in the whole house. Other microorganisms produce the gas carbon dioxide (CO₂) when combusting glucose in an aerobic environment. Water mattresses with a relatively high content of fermenting microorganisms usually need to be de-aerated often in order to remove the gas bubbles from the mattress. The volume of a waterbed generally contains sufficient oxygen to sustain a microorganism having a fermenting metabolism for a prolonged period, such as for a few years.

A number of years ago, a new type of water mattress was introduced which was provided with a stabilization system in order to reduce wave motion when getting in or out or when turning over in bed. The stabilization is usually achieved by one or more layers from damping foam, fibers or fins. Although the development of a stabilized water mattress (also known by the name of 'motionless' or 'waveless' mattress) has greatly stimulated the sale of waterbeds, it has also created a considerable problem. The reason is that the internal stabilization system offers the possibility to certain bacterial strains to adhere to the surface of the system to form colonies there.

In addition to fermenting microorganisms, a water mattress may also contain non-fermenting microorganisms. Non-fermenting microorganisms are substantially independent of an oxidative metabolism since they can also use other molecules than (hydro)carbons as fuel. Non-fermenting bacteria can metabolize, for instance, nitrogen and/or phosphate-containing molecules to obtain energy. In contrast to a waterbed having a substantially fermenting microflora or flora, a waterbed having a substantially non-fermenting flora hardly ever needs to be de-aerated and such a waterbed causes considerably fewer odor problems.

Therefore, a classical approach to problems associated with a poor water quality is controlling the microflora, microbial flora or flora considered to be responsible for odor and/or gas formation. A commonly used method to control growth of such microorganisms consists in periodically adding a chemical product having antimicrobial activity, a so-called 'disinfectant'. There are several of these biocidal products, also called 'waterbed conditioners' on the market. Virtually all current chemical conditioners contain the quaternary ammonium compound alkylbenzyldimethylammonium chloride (QUAT) as active substance. This chemical compound has an inhibitory effect on the growth of microorganisms. For an example of such a conditioner, reference can be made to DE-OS 19755319.

In addition, in practice, a perfume is often added to the water to further disguise any unpleasant odors. However, there are a number of drawbacks associated with the use of chemical waterbed conditioners. Firstly, the activity of a biocide is usually aspecific, so that both the harmful, fermenting microflora and the beneficial, non-fermenting microorganisms are killed. Secondly, the concentration of a chemical conditioner, or biocide, in a water mattress is often too low to significantly reduce the number of bacteria in a waterbed. Thirdly, some biocides do not kill harmful microorganisms but only inhibit their growth. Moreover, the sensitivity of a fermenting flora to biocides is often found to be lower than that of a non-fermenting flora, with the result that existing biocides advantage the growth of 'bad' flora at the expense of a 'good' flora. This often only makes the gas and odor problem worse. In addition to the above drawbacks with respect to the action mechanism of chemical conditioners, there is a risk that the water treated with biocide, or even a bottle containing the concentrated biocide, is drunk, with all its harmful consequences. Particularly the more aggressive chemicals which are used to kill the most harmful bacterial strains, such as bacteria which are particularly found in the popular, stabilized water mattresses, may form a health hazard upon ingestion. Another drawback of the use of current biocidal waterbed conditioners is the fact that the chemical constituents end up in the wastewater each time the water in the waterbed is changed. This increases the ever-growing problem of water pollution.

The above shows that the effective control of a gas and odor-forming microflora in a water mattress, while the current standards with respect to safety and environmental pollution are substantially met, is hard to realize using the methods and products known up to now.

The invention provides the insight that a 'good' flora can be added to a waterbed in order to reduce the concentration of 'bad' flora present in a water mattress. By competition for nutrients and space, an overmeasure of 'good' flora gets more chance to grow, at the expense of the growth and development of a 'bad' flora. The invention provides a method for regulating the quality of water in a waterbed, comprising adding to the water in the waterbed first microorganisms, belonging to the genus to which *Chryseomonas* spp. belong, that are able to reduce the amount of second microorganisms present in a waterbed, said second microorganisms being fermenting microorganisms. Further, the present invention relates to the use of first microorganisms as defined in claim 1 in a waterbed conditioner or to regulate the quality of water in a waterbed. In accordance with the present invention the at least one first microorganism, if added to a waterbed containing at least one second microorganism, is able to influence and particularly reduce the amount of at least the second microorganism present in the waterbed, suitable which first microorganisms can be selected by a method which comprises the steps of: a) obtaining at least one first microorganism; b) obtaining a sample containing at least one second microorganism; c) determining the amount and the identity of the second microorganism in the sample; d) adding the first microorganism to the sample; e) incubating the sample under conditions in which the first microorganism grows; f) determining the amount and identity of at least the second microorganism in the sample after addition of the at least first organism; g) determining the difference between the amount of second microorganism in the sample exposed to the first microorganism and the amount of second microorganism in the sample before exposure to the first microorganism; and h) selecting at least one first microorganism which is able to influence the amount of at least the second microorganism in the sample.

It is known that the growth of one microorganism can inhibit or, conversely, stimulate the growth of another microorganism. Such microbial interactions are referred to as antagonism and synergism, respectively. Antagonism between microorganisms is involved when one species or group of microorganisms brings about a change in the growth conditions which is unfavorable to the development of another species or group. So, a microorganism can inhibit the development of another microorganism by making the environment less favorable, for instance by removing necessary nutrient constituents, by changing the pH or the redox potential, or by producing growth-inhibitory constituents. Symbiotic relations between microorganisms are also found. The mechanisms of these interactions are essentially the same as those of symbiosis. The importance of microbial antagonism should not be underestimated. The relatively low incidence of food poisonings due to *inter alia S. aureus, C. perfringens,* and *C*. *botulinum* may probably partly be explained by the sensitivity of these microorganisms to competition and inhibition by, for instance, *Pseudomonas* species, *Enterobacteriaceae, Bacillus* species, lactic acid bacteria, non-pathogenic *Staphylococcus* and *Micrococcus* species.

A first microorganism belonging to the genus Chryseomonas spp. is a non-fermenting microorganism that can be obtained in different in anners, for instance from a commercial culture collection as from the Deutsche Sammlung von Mikroorganismen und Zellkulturen GmbH, Braunschweig, Germany (DSMZ; see www.dsmz.de) or from the American Type Culture Collection (ATCC; see www.atcc.org). A second microorganism that is a fermenting microorganism can be obtained from the same source. The amount of the second microorganism in a sample can easily be determined by determining the germ count.

The number of microorganisms per milliliter is usually expressed by the number of colony-forming units per milliliter (CFU/ml), the so-called germ count. The germ count of a sample can easily be determined by a skilled person or anyone with some microbiological knowledge and experience. For instance, the sample or a known dilution thereof is introduced into a Petri dish. Into the dishes, a lukewarm agar-containing nutrient medium is poured and the sample (dilution) is properly mixed with this nutrient medium. Then, the nutrient medium cools down and the medium becomes rigid due to the presence of agar which "solidifies". After incubation, usually consisting in setting aside the Petri dish in a heated incubator, the number of colonies is counted. Via the dilutions used, it can very easily be calculated how many microorganisms per milliliter are present. After adding a first microorganism according to the invention to a sample containing at least one second microorganism, the sample is maintained, or incubated, under conditions comparable to the conditions in a waterbed. A number of different microorganisms, and/or different dilutions thereof, may be tested in parallel for their capacity to influence a second microorganism. A number of non-fermenting bacterial strains in a liquid suspension culture are, for instance, added in a series of different proportions, such as 1:10, 1:100 and 1:200, to a sample, preferably a culture tube containing at least one second, fermenting bacterial strain in a liquid medium. This is preferably a poor, aqueous medium in order to simulate the conditions in a waterbed as well as possible.

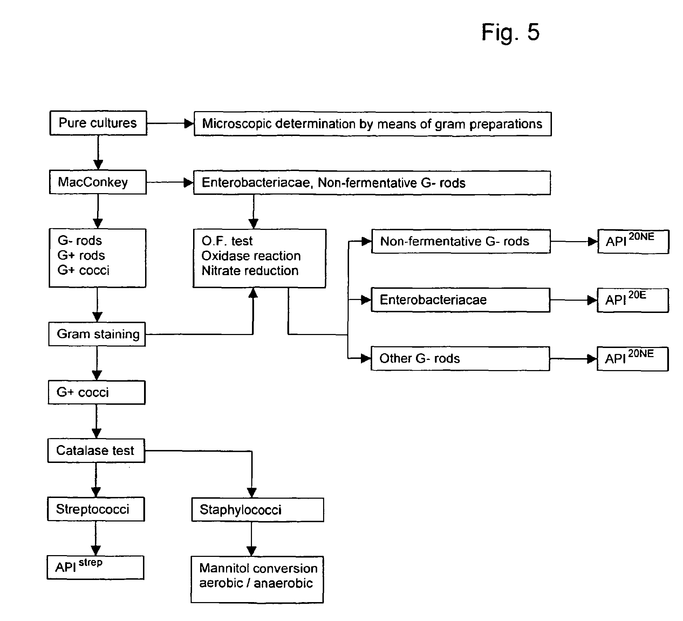

A microorganism can be identified on the basis of a determination survey as shown in Fig. 5, in which use is made of standard microbiological determination methods such as Gram staining, selective nutrient media, oxidase test, nitrate reduction test, and other determination methods. A skilled person is well able to judge which methods or tests can be used with advantage and in which manner these should be carried out. A first and an at least second microorganism are preferably grown in a laboratory. Here, a distinction can be made between growing in a liquid, also called medium or broth, or on a solid basis. In both cases, usually, use is made of medium, whether solidified or not, containing all nutrients essential to the growth. Just like higher organisms, microorganisms need energy to survive and to grow. Therefore, a substrate, often particular sugars, is added to the medium. Further, often, vitamins are admixed with the medium. Each microorganism, such as a bacterium, has its specific preferences with respect to the food and the environmental conditions. For instance, the temperature, the pH and the salt concentration may be taken into account. After addition of a first microorganism to a sample, the sample is incubated under conditions favorable to the growth or multiplication of the first microorganism. This is because suitable growth conditions enable the first microorganism to influence the second microorganism, for instance by competing for nutrients or space, or by excreting a substance which has an effect on the second organism. When a liquid medium is used, growth may simply be determined in that the liquid becomes turbid or in that a kind of precipitation occurs. On solid medium (plates), usually, colonies are formed. These are small spots of bacteria which can often be perceived with the eye. Colonies may have spectacular colors, depending on the species, the medium on which they grow and whether particular color reactions have been carried out. These color reactions can be used with advantage to demonstrate the presence of a particular microorganism.

After a certain incubation period, the amount of the second microorganism in the sample is again determined in order to determine the effect of the addition of the first microorganism on the at least second microorganism. The period of incubation depends on the type of first microorganism as well as on the second microorganism and on the medium chosen. A fast-growing first microorganism may, for instance, influence a second microorganism already after a relatively short incubation time. However, in the case that a first microorganism has a relatively long lag time, a longer incubation time is needed to be able to judge whether the first microorganism influences a second microorganism. The lag time is the time the microorganism needs to adjust to the environment in order to grow, i.e. the period which lapses before the multiplication of a microorganism starts. In general, the incubation time also depends on the relative amounts of the first and the at least second microorganism; the more of a first microorganism is added to the sample, the sooner an effect may be expected on the second microorganism. As a final step in a method according to the invention, the difference is determined between the amount of a second microorganism in a sample which has been exposed to a first microorganism, and the amount of second microorganism in the sample before exposure to the first microorganism. If there is a difference, either positive or negative, it can be concluded that a first microorganism is able to influence the amount of at least the second microorganism in the sample.

The invention makes use of a first microorganism which can inhibit the development and/or growth of a fermenting organism which causes problems in a waterbed mattress. A first organism to be used according to the invention is a microorganism having a non-fermenting metabolism, i.e. a non-fermenting microorganism. As described in the detailed description, the invention provides a non-fermenting organism which can overgrow at least one fermenting microorganism, such as a microorganism which can produce CO₂, H₂S or ammonia. A non-fermenting first organism according to the invention is a bacterium belonging to the genus *Chryseomonas* spp. A first microorganism preferably has no negative effect on the water quality of a water mattress and has no influence on the constituents of the water mattress, such as the waterbed vinyl and the waterbed foam. The influence of a first microorganism on waterbed vinyl may be determined in various manners. For instance, as described in the detailed description, it can be determined whether the vinyl obtains a reduced stretch and shrinkage. For the foam, it can be tested whether it obtains a reduced resilience.

In a preferred embodiment of the invention, an at least second organism is a fermenting organism which may cause problems in a waterbed, such as a bacterium belonging to the genus to which *Staphylococcus* spp., *Escherichia* spp., *Stenotrophomonas* spp., *Pasteurella* spp, *Bacillus* spp, *Serratia* spp, *Enterococcus* spp. or *Enterobacter* spp. belong. In order to determine whether a first microorganism according to the invention can influence a second fermenting microorganism in a sample, gas formation in the sample can be tested for. For instance, the formation of H₂S and/or ammonia can be investigated in a relatively simple manner. H₂S-forming bacterial strains possess the enzyme cysteine desulfhydrase. This enables them to release sulfur from sulfur sources such as peptone, cysteine, cystine and thiosulfate. After this, the released sulfur binds to hydrogen to form H₂S. H₂S can be demonstrated by adding heavy metals to the sample, so that an insoluble, black metal sulfide compound can be formed. In another test, the presence of one or more ammonia-forming bacterial strains can be determined by determining the enzyme activity of bacterial urease in a sample. Urea is a substrate which is rapidly hydrolyzed by urease to two molecules of ammonia. This causes an increase in the pH, which can very simply be detected by means of a pH indicator, for instance phenol red. A color change from yellow to red or red-purple is positive and indicates the presence of at least one urease- containing second microorganism.

A method for selecting a first microorganism or 'good flora' which can overgrow a second, H₂S or ammonia-forming microorganism comprises, for instance, an above-mentioned test for gas formation to demonstrate a change in the gas-forming, 'bad' microflora.

During a normal use of a first microorganism according to the invention as bioconditioner, it is not improbable that the consumer is amply exposed to the microorganism, such as a non-fermenting bacterial strain. However, needless to say, for the use of a first microorganism as bioconditioner for a waterbed, a first organism according to the invention is preferably a non-pathogenic microorganism which is substantially harmless to humans. Of most, if not all, microorganisms already known, the extent to which they may form a health hazard is known. For instance, *Pseudomonas* spp., in particular *P. aeruginosa,* may cause infections in persons having decreased resistance.

A waterbed conditioner to be used according to the invention preferably contains at least one microorganism to be used according to the invention, which can be grown rapidly, inexpensively and easily on an industrial scale. The growth properties of a microorganism can be tested by a skilled person, for instance by scaling up cultivation procedures used under laboratory conditions. Preferably, a first microorganism according to the invention can grow to a high density. This offers the advantage that the good flora can be added to a waterbed in the form of a concentrated culture, i.e. microconcentrate. The higher the germ count of a bioconditioner according to the invention, the greater the chance that the first microorganism will "catch on", i.e. will start to grow, in a waterbed. A microconcentrate according to the invention preferably comprises at least 10⁶ CFU/ml, more preferably at least 10⁷ CFU/ml, such as 10⁸ to 10¹⁰ CFU/ml.

After administration of a first microorganism according to the invention to a waterbed, the organism is preferably able to rapidly multiply in the waterbed. This is because the higher the growth rate of the first microorganism, the better the growth of a second microorganism can be inhibited. It has been found in practice that an increase in the relative germ count of a first organism in a waterbed of at least 5% in a few months, such as 2-4 months, has sufficient inhibitory effect on a bad or problem flora in a waterbed. The determination of the relative germ count is described elsewhere in the invention. However, the relative increase is preferably higher, such as at least 10%, or more preferably at least 15% or even at least 30%, and is preferably achieved sooner, so that the bad flora does not get a chance. As described elsewhere, the invention provides a microconcentrate with *C. luteola* by means of which a relative increase of approximately 15-25% can be achieved in a period of 1 to 3 months. In addition, in all treated waterbeds which were previously considered problem waterbeds, the problems of gas and/or odor formation have decreased. The invention thus provides a method for obtaining a waterbed conditioner, comprising selecting a first microorganism according to the invention.

Preferable, a first microorganism to be used according to a method of the invention is able, after administration to a waterbed, to reduce the total germ count. As Table 6 shows, the total germ count of a waterbed sample has decreased in virtually all tested waterbeds after administration of a *C. luteola* microconcentrate.

In addition, it is preferred that a first microorganism has a long storage life and does not lose its activity in the period between the moment of production and the moment of use as waterbed conditioner by the consumer. The invention provides a waterbed conditioner at least comprising first microorganism to be used according to a method according to the invention, which remains stable for quite a period, such as a few weeks, or more preferably a few months or even a few years. The invention provides, for instance, a *C. luteola* microconcentrate whose starting concentration (expressed in number of colony-forming units per milliliter) does not decrease after placing or storing the concentrate at 4 °C or at room temperature for a period of at least four months. The invention further relates to an assembly of a container with one first microorganism to be used according to a method according to the invention, and directions for use. Directions for use may be a label applied on the container or may be an instruction leaflet separately added to the container. The directions for use indicate, for instance, in which manner the consumer can use the first microorganism, such as a non-fermenting bacterial strain, as waterbed conditioner. It states, for instance, in which amount and at which frequency, the microconcentrate, containing at least one first microorganism according to the invention, can be added to a water mattress in order to improve or stabilize the water quality. A container is a tank which is suitable for storing and/or transporting the first organism, for instance in a liquid form such as a bacterial suspension. A container can preferably be closed off adequately so that the microorganism does not get outside the container during the storage and/or the transport. Examples of suitable containers are a bottle, a retort, a flask, a jar or a tube. In a preferred embodiment of the invention, a container is reclosable, for instance with a cap provided with thread. A reclosable container offers the advantage that a consumer does not need to use the total contents of the container at once, but can also use a part of the total amount of microorganism. In another embodiment, however, the container contains a measured amount of a first organism in suspension, for instance 50 milliliters, which is sufficient for a single treatment of a waterbed. The invention also provides a container with the superscription 'waterbed conditioner' or another superscription or notice indicating that the contents of the container can be used as waterbed conditioner.

In addition, the invention provides an assembly of a waterbed and a first microorganism obtainable according to a method according to the invention.
Fig. 1: the influence of the pH on the formation of CO₂, HCO₃⁻ and CO₃²⁻
Fig. 2: the shrinkage values (A) and stretch values (B) of test strips without seal layer after exposure for a certain time to tap water without (Blank) or with lysozyme (Enzyme).

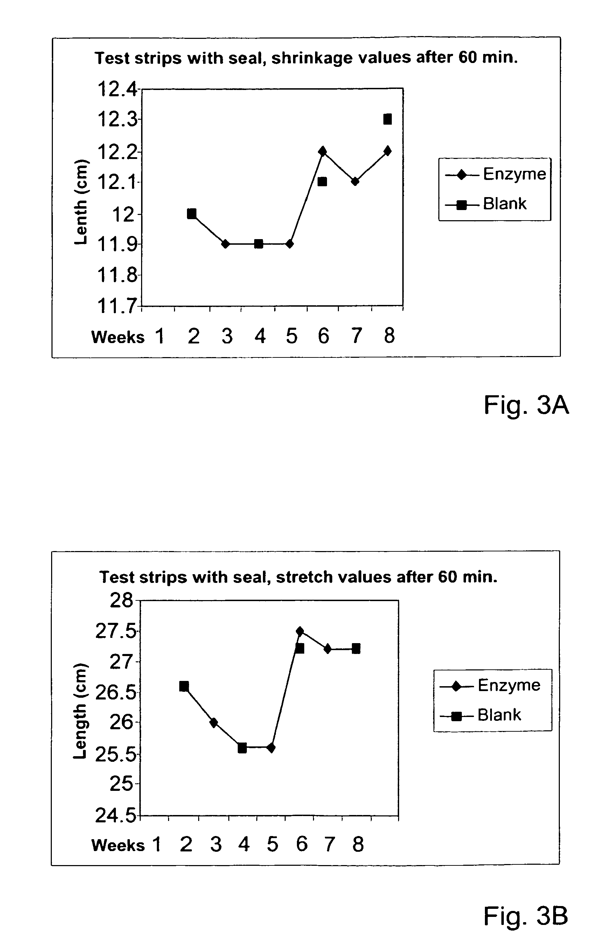

Fig. 3: the shrinkage values (A) and stretch values (B) of test strips with seal layer after exposure for a certain time to tap water without (Blank) or with lysozyme (Enzyme).
Fig. 4: the height of a block of waterbed foam with (A) and without (B) weight of 4.5 kilograms after exposure of the foam to tap water without (Blank) or with lysozyme (Enzyme).
Fig. 5: determination survey of bacterial strains
   Table 1: MIC values of disinfectants for the tested microorganisms.
   Table 2: MBC values of disinfectants for the tested microorganisms.
   Table 3: The effect of lysozyme on the bad flora in different waterbeds.
   Table 4: The effect of lysozyme on the stretch and shrinkage of test strips without seal layer.
   Table 5: The effect of lysozyme on the stretch and shrinkage of test strips with seal layer.
   Table 6: The effect of a non-fermenting microconcentrate on the water quality of tested waterbeds.

To come to a better understanding of the water quality in waterbeds, the microbiological composition of the water in waterbeds has been investigated. Here, samples were used from problem waterbeds and trouble-free waterbeds. The most common problems are gas and odor formation. Research has shown that, in problem waterbeds, higher concentrations of microorganisms are found, namely 1* 10⁷ - 1* 10⁹/ml; in trouble-free waterbeds, the concentration is around 1* 10⁵- 1* 10⁶. It was investigated for these microorganisms whether they are able to form gas and/or odor. In a normal waterbed and a problem waterbed, the most common microorganisms which are able to form gas and odor are *S. aureus, S. epidermidis* and *Stenotrophomonas maltophilia,* as well as *Pasteurella spp.* and *Pseudomonas aeruginosa.* However, the latter two are only able to form odor. To increase the water quality of waterbeds, different conditioners are present on the market. All these conditioners have the same active constituent, namely alkylbenzyldimethylammonium chloride (QUAT). Despite the use of these conditioners, problems still occur in different regions. The activity of these conditioners has been investigated for the different microorganisms shown by research to be the cause of the gas and odor problems. Research has shown that the conditioners do not kill or inhibit the problem microorganisms, and, thus, do not reduce the gas and odor problems. In the examples described below, different disinfectants have been tested for the possibility to inhibit/kill the "bad" flora.

### Example 1: Testing activity of alternative conditioners

The extent of inhibition of the growth of a microorganism by an antimicrobial agent, such as a disinfectant, can be expressed as Minimal Inhibition Concentration (MIC). The concentration of an antimicrobial agent at which a microorganism is killed is usually expressed as Minimal Bactericidal Concentration (MBC). By investigating MIC and MBC, the sensitivity of microorganisms to different disinfectants which could function as alternative conditioner was tested. The microorganisms can be divided into three groups:
1. The "good" flora, for instance *Staphylococcus aureus* and *Staphylococcus epidermis.*
2. The "bad" gas-forming flora, for instance *Pseudomonas aeruginosa* and *Pasteurella* spp.
3. The "bad" odor-forming flora, for instance *Enterobacter cloacae.*

The conditioners were tested on the good flora and the gas-forming flora. MIC stands for Minimal Inhibition Concentration, the lowest concentration at which the growth of the flora is inhibited. MBC stands for Minimal Bactericidal Concentration, the lowest concentration at which the flora is killed. The following disinfectants were tested:
- Alkylbenzyldimethylammonium chloride (QUAT)
- Ethylenediaminetetraacetic acid (EDTA)
- Chloroform
- Hydrogen peroxide
- Sodium dodecyl sulfate (SDS)
- Peracetic acid
- Glutaraldehyde
- Lysozyme
   QUAT is the active constituent of the conditioner which is currently present on the market. As a basis, 250 ml of disinfectant in a 600-liter waterbed was taken, so that the concentration of disinfectant is 0.04%.

### Results:

The MIC values found of the different disinfectants per microorganism are summarized in Table 1. The MBC values found of the different disinfectants per microorganism are summarized in Table 2.

### Conclusions:

QUAT, EDTA, chloroform and hydrogen peroxide do not have an inhibitory effect on the "bad" flora; the "good" flora is initially inhibited, but due to disintegration of the disinfectant, the flora gets the chance to recover. Further, they have no killing effect on either the "bad" or the "good" flora. SDS and glutaraldehyde have no inhibitory and no killing effect on either the "bad" or the "good" flora. Peracetic acid has an inhibitory and killing effect on the "bad" flora and also the "good" flora. Lysozyme has an inhibitory but no killing effect on the "bad" flora and the "good" flora.

### Example 2: Selection of peracetic acid (Reference Example)

In waterbeds, two problems occur, namely gas and odor formation. Gas and odor formation have a biological cause. However, research has shown that gas formation may also have a chemical cause. The research consisted in adding peracetic acid to problem waterbeds.

### Results:

By adding the peracetic acid, an acid smell arose that lingered around the waterbed for weeks. Laboratory results further showed that microorganisms which could form gas or odor were no longer present in the waterbed, however, the gas problems were not reduced, but had only become worse.

The worsening of the gas problems probably has a chemical cause. In water, carbonic acid naturally occurs. Carbonic acid can occur in three forms, namely as CO₂ in gas form, as HCO₃⁻ ion dissolved in water and as CO₃²⁻ ion dissolved in water. Of these, CO₂ is the "bad" form; the latter two forms cause no problems. However, these three forms are in equilibrium with one another, which can be seen in the following two reaction equations:

(1) CO₂ + 2H₂O ↔ H₃O⁺ + HCO₃⁻

(2) HCO₃- + H₂O ↔ H₃O + CO₃²⁻.

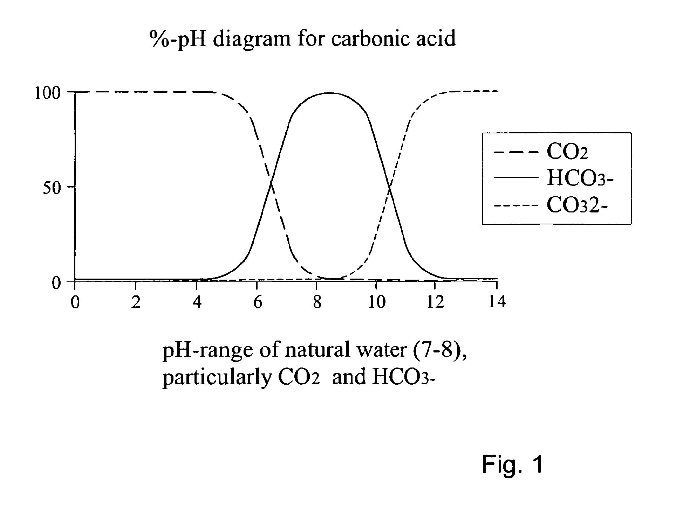

By change of conditions of the waterbed, for instance by de-aerating, heating or reducing the pH, as in the case of the peracetic acid, the equilibrium of the two reactions shifts to the left. The result of this is that more HCO₃- and therefore more CO₂ can be formed and that the gas problems become worse. Fig. 1 illustrates the influence of the pH on the formation of CO₂, HCO₃- and CO₃²-. When the pH of the waterbed water is around 8 - 8.5, hardly any or no CO₂ is formed. The lower the pH, the greater the CO₂ formation is. The pH of waterbed water can be increased by using lye (pH approx. 9).

### Conclusion:

Gas problems may have both a biological and a chemical cause. By adding peracetic acid to the waterbed, the pH is lowered so that more dissolved CO₂ passes into the gas form and thus escapes. The pH of a waterbed can be increased by adding lye to the water so that hardly any or no CO₂ is formed.

### Example 3: selection of lysozyme (Reference Example)

Lysozyme is an enzyme which affects the cell wall of Gram-negative microorganisms so that they cannot grow. The gas and odor problems in waterbeds are, in many cases, caused by Gram-negative microorganisms. It was tested whether adding lysozyme into a waterbed reduces the concentration of "bad" flora so that the "good" flora gets the chance to grow. To different waterbeds with a known number of colony-forming units per ml (CFU/ml), 0.001 gram of lysozyme is added per 100 liters of water. Once a month, a water sample is taken from the waterbeds and the CFU/ml is determined. It was taken as a measure that the decrease of the "bad" flora should be at least a factor 100 before the activity may be called positive.

### Results:

In the separate waterbeds, the effect of lysozyme on the development of the CFU/ml was determined. The results are summarized in Table 3.

### Conclusion:

In this concentration, the lysozyme is too unreliable. In only 13% of the cases, a clear decrease of the number of CFU/ml can be found. In those cases in which a decrease is found, the decrease reaches a peak after approximately a month; after approximately 2 months, however, the activity of the lysozyme has already been undone and an increase of the number of CFU/ml again takes place.

### Example 4: Effect of lysozyme on waterbed material (Reference Example)

In order to measure the influence of the lysozyme on the waterbed vinyl and the waterbed foam, three different tests have been used, namely a tensile strength test, a stretch and shrinkage test and a foam test. In the tensile strength test and the stretch and shrinkage test, it is investigated for the waterbed vinyl whether it obtains a reduced stretch and shrinkage after exposure to the lysozyme. In the foam test, it is determined whether the foam obtains a reduced resilience.

### Tensile strength test:

In the tensile strength test, it is determined whether the stretch of waterbed vinyl, with and/or without seal layer, is affected by the action of lysozyme. For this purpose, from the waterbed vinyl to be tested, shortened, normalized test strips are cut. These are placed in tap water (blank) and in tap water with a concentration of 50 international Units of lysozyme per ml. The standardized test strips are placed in the dark at room temperature. By means of a tensile strength tester, the test strips are tested for a particular time. Here, it is recorded how large the test strip was at the moment it broke (the elongation) and also the force (F max) needed for this. The average elongation and F max are determined and compared to the reference value. The reference value has been determined by means of test strips which did not have any action from blank or enzyme.

### Results:

Table 4 shows the test results of the test strips without seal layer. Table 5 shows the test results of the test strips with seal layer.

### Conclusion:

The results of the tensile strength tests indicate that the lysozyme has no measurable influence on the stretch of the waterbed vinyl. For both the waterbed vinyl with and without seal layer, the measured values do not significantly differ from the reference values.

### Stretch and shrinkage test

In the stretch and shrinkage test, the influence of a lysozyme on the stretch and shrinkage of standardized waterbed vinyl test strips is determined. From the waterbed vinyl to be tested, standardized test strips are cut. These test strips are placed for an indefinite time in tap water (blank) and in tap water containing a concentration of the enzyme of 50 international Units of lysozyme per ml (enzyme). This is done in triplicate for test strips with and without seal. The test strips are stored in the dark at room temperature. Further, reference test strips are tested which have had no tap water or enzyme treatment. The measurements of the reference strips were carried out in week 1. Before the start of the test, the standardized test strips are to be removed from the solution and dried properly by means of a cloth. On the test strip, on both sides, a line is to be drawn at 4 cm; the test strip is clamped to this point. The area between the two 4 cm lines is the measuring area. Then, the test strip is clamped in the set-up, after which the weight (approximately 5 kg) is suspended from it. At the following points in time, the size of the measuring area is measured: 0.25, 0.5, 1, 2, 5, 10, 30, 60 minutes. These data are indicative of the stretch. After an hour, the test strip is removed from the set-up. At the following points in time: 0.25, 0.5, 1, 2, 5, 10, 30, 60 minutes, the size of the measuring area is measured. These data are indicative of the shrinkage.

### Results:

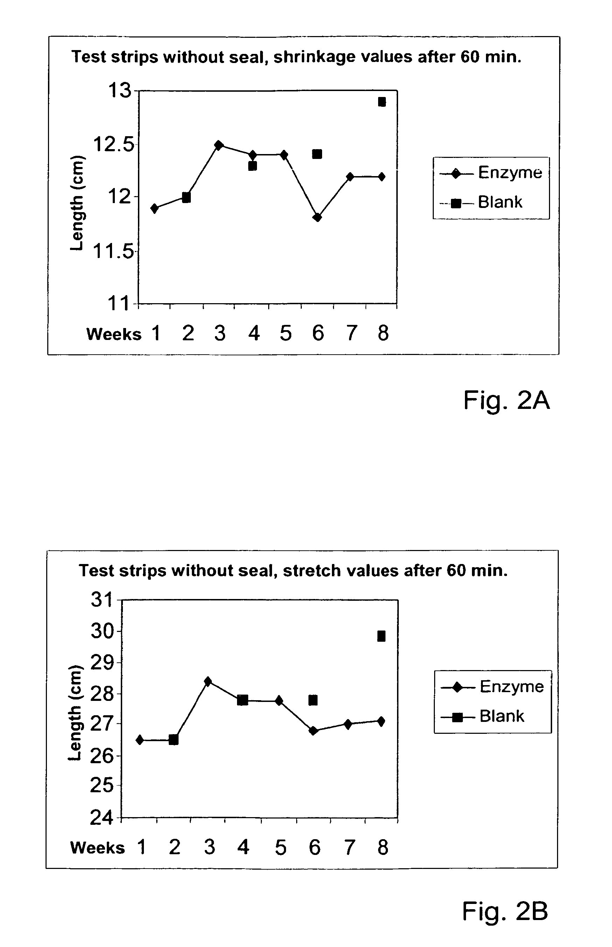

The stretch and shrinkage values of test strips with and without seal layer were determined after measuring for 60 minutes. The values of the blank and the enzyme treatment are shown in Figs. 2 (without seal layer) and 3 (with seal layer). The dotted line in the graphs indicates the reference value, measured in week 1.

### Conclusion:

Lysozyme has no measurable effect on the stretch and shrinkage of the waterbed seal. The enzyme and blank treatment have the same effect on the waterbed seal. The shrinkage and stretch values both fluctuate around the reference line.

### Foam test

By means of the foam test, it was tested whether, due to the action of lysozyme, the waterbed foam compresses more and resiles less. For this purpose, blocks of waterbed foam which are 22 cm long, 29 cm wide and 13.5 cm high are placed in trays with only tap water (blank) or in tap water containing a concentration of 50 international Units per ml of the lysozyme (enzyme). The test is carried out in duplicate and in the dark at room temperature. On the waterbed foam, a weight of 4.5 kilos is placed. Every other week, the height of the waterbed foam with and without weight is measured. The measurement without weight is carried out an hour after the weight of the waterbed foam has been removed.

### Results:

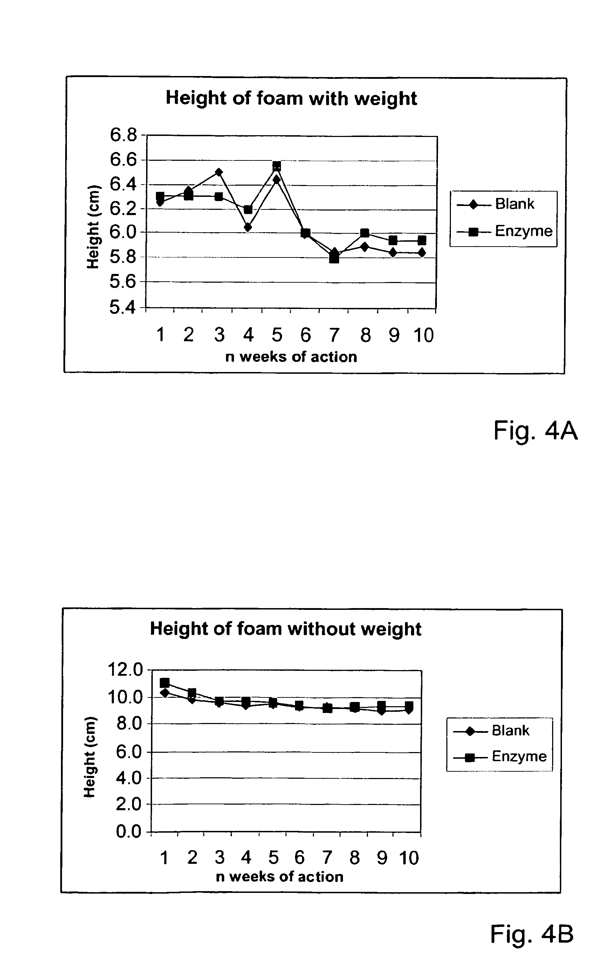

Fig. 4 shows the height of the foam with weight (panel A) and without weight (panel B).

### Conclusion:

Lysozyme has no measurable influence on the shrinkage (Fig. 4A) and resilience (Fig. 4B) of the waterbed foam. The influence of water without and with lysozyme is virtually the same.

### Example 5: Microconcentrate

By adding a high concentration of "good" flora, this should be able to overgrow the "bad" flora. By competition for nutrients and space, because of the overmeasure of "good" flora, it will get more chance to grow so that the concentration of "bad" flora will decrease. *Chryseomonas luteola* is used for the microconcentrate. *Chryseomonas luteola* has no negative properties with respect to the waterbed conditions and therefore belongs to the "good" flora. Under optimal conditions, this microorganism can grow to a concentration of 1* 10¹⁰. This concentration was used for the microconcentrate.

### Storage life test

Microconcentrate with a concentration of 1* 10¹⁰ was placed for four months at room temperature and 4°C. Each week, a sample was taken from the microconcentrate and the CFU/ml was determined. After four months, the starting concentration of the microconcentrate is still constant. So, microconcentrate has a storage life of at least four months both at room temperature and at 4°C.

### Field tests

Field tests were carried out with a microconcentrate made with *Chryseomonas luteola.* This non-fermenting microorganism is a Gram-negative rod which, under optimal conditions, can grow to 1 * 10¹¹- 1 * 10¹² CFU/ml.

To a series of waterbeds, 50 ml of microconcentrate containing 1* 10¹⁰ *Chryseomonas luteola* was added to both waterbeds which had been filled with fresh tap water shortly before and to waterbeds in which a microflora had already developed. The microbiological status of all waterbeds was accurately determined, at different times before and after administration of the microconcentrate, by means of standard microbiological techniques, such as pure culture, selective culture and determination of the germ count by means of dilution plate method. The pH and the hardness of the water samples were determined by means of calibrated, digital measuring instruments.

### Results:

Table 6 shows the data of the nine waterbeds (ID 39, 47, 55, 56, 57, 58, 59, 60, 61) to which 50 ml of microconcentrate containing 1 * 10¹⁰ non-fermenting microorganism was added.

In all beds, which have a volume varying from 100 to 600 liters, the microorganism clearly catches on and, some time after administration, a clear relative increase can be seen in the *C. luteola* germ count. This relative increase varies from approximately 2% to approximately 20% in a period of approximately 1 to 3 months. Further, after administration of the microconcentrate, in most cases, the total germ count decreases.

### Conclusion:

A 50-ml preparation, i.e. microconcentrate, of 1 * 10¹⁰ *Chryseomonas luteola* is able to colonize a waterbed with a volume of 100 to 600 liters when the waterbed has been provided with fresh tap water shortly before this. The microconcentrate can overgrow fermenting bacteria present in a freshened waterbed. In addition, the microconcentrate is also found to be able to colonize existing waterbeds and to be able to overgrow the already colonized fermenting bacteria. Finally, the waterbeds provided with the *C. luteola* microconcentrate as waterbed conditioner demonstrate considerably fewer problems, such as odor and gas formation, which are associated with fermenting bacteria.

In summary, it has been found that the gas and odor problems in waterbeds are caused by microorganisms. The "bad" gas-forming flora are Gram-negative rods which are mainly found in the intestinal flora. It has been found that the conditioner (active constituent QUAT) which is currently available on the market does not kill or inhibit these microorganisms and that it inhibits the "good" flora. Alternative conditioners have been tested for the possibility to inhibit/kill the "bad" flora and to leave the "good" flora undisturbed. In this test, peracetic acid, lysozyme have been found as possible options. Peracetic acid has an aggressive nature and research has shown that, after addition to waterbeds, the gas problems become worse. The cause of this is that the pH is lowered so that more dissolved CO₂ passes into the gas form and thus escapes.

Further, the peracetic acid causes a pungent odor. For these reasons, further investigation of peracetic acid was discontinued. The field tests with lysozyme have shown that it works sporadically. The lysozyme is not reliable in the concentration (0.04%) in which it has been tested. The influence of lysozyme on the waterbed foam and waterbed vinyl has been tested. This investigation has shown that lysozyme has no measurable influence on this. This invention provides the insight that, by adding a high concentration of "good" flora (microconcentrate) to a waterbed, this is able to overgrow the "bad" flora so that the concentration thereof reduces, and therefore also the gas and odor problems. As "good" flora, *Chryseomonas luteola* was initially chosen. A microconcentrate with *Chryseomonas luteola* has been found to be remarkably well able to maintain itself in either a new or existing waterbed environment and thus overgrow the "bad" flora. It reduces the gas and odor formation and is therefore very suitable as waterbed conditioner.

### Example 6: Identification of microorganisms

In this example, an analysis is described of the microorganisms found in waterbeds and of what the biological quality of the water in these beds is.

### Procedure

For this example, two approaches were chosen. Firstly, water samples from various problem beds and from trouble-free beds were analyzed, i.e. all bacteria present in the sample were named. Secondly, a historical research was carried out in data files of the inventors to find out which microorganisms were found in them.

### Summary of the results

| Bacterium | Metabolism* | Problem** | Remark |
|---|---|---|---|
| *Staphylococcus aureus* | F | No | Present in a 13-year old and trouble-free bed. Age of the bed probably decisive. |
| *Escherichia coli* | F | Yes | Classic gas-forming intestinal bacterium |
| *Enterobacter aerogenes* | F | Yes | See above |
| *Enterococcus faecalis* | F | No | Skin flora, usually inert strain which seems to contribute only little to water ecosystem |
| *Staphylococcus epidermidis* | F | No | See above |
| S*treptococcus pyogenes* | F | No | Cause of inflammations in immune compromised persons. Contributes little to stabilization, but causes hardly any problems. |
| *Streptococcus viridans* | F | No | See above |
| *Bacillus subtilis* | F | Yes/No | Soil bacterium, sometimes associated with problems, very hard to get rid of due to spore formation |
| *Bacillus cereus* | F | No | See above, this bacterium is particularly found in food. Perhaps contamination after meals. No real cause of problems due to slow metabolism in water |
| *Corynebacterium acnes* | F | No | Skin flora, is pathogenic, Is hardly found in waterbed and only in very small amounts |
| *Serratia marscescens* | F | Yes/No | Intestinal flora, sometimes associated with problems. Known from the red-formation (by pigment) in wet environments (e.g. joints of bathroom tiles) |
| *Enterococcus faecium* | F | Yes/No | Coccoid intestinal bacterium, grows more slowly than bacillar intestinal bacteria |
| *Pseudomonas luteola* | N | No | Non-fermentor, probably closely related to Chryseomonas luteola. |
| *Pseudomonas aerogenes* | N | No | Non-fermentor, maintains itself in trouble-free waterbeds, but is pathogenic in immune compromised |

| | | | |
|---|---|---|---|
| * F = Fermentor, N = non-fermentor ** Gas formation and/or odor formation | | | |

These analyses show that a number of new bacteria present in waterbeds have been found. Remarkably, most of these new bacteria are fermentors.

Further, it has been determined that the newly found bacteria are all present in low to very low numbers. This can lead to the conclusion that, although they are present, they contribute little to nothing to the stability of the microbiological ecosystem in the waterbed. It has further been shown that there is no absolute boundary between metabolism and chance of problems in the waterbed. For instance, remarkably, the bed which only contained *Staphylococcus aureus* in low amounts, was a bed which, however, had been untouched for 13 years. In this period, the resident flora (non-fermentors) has probably died out gradually and the remaining fraction of *S. aureus* probably forms the group which survived after a long time.

### REFERENCES

Biemans et al. Fundamentele biologie [Fundamental biology], 2nd ed., Bohn Stafleu Van Loghum, Houten, 1987.
Madigan et al. Biology of microorganisms, 8th ed., Prentice Hall, USA, 1997.
Knecht and Doornbos, Bacteriologie voor laboratorium en kliniek 1 [Bacteriology for laboratory and clinic], 3rd ed., Bohn Stafleu Van Loghum, Houten, 1995.
Brooks et al. Medical Microbiology, 20th ed., Appleton & Lange, 1995.
Cappuccino and Sherman, Microbiology a laboratory manual, 6th ed., Benjamin Cunnings, 2001. http://www2.austin.cc.tx.us/microbugz/labindex.html

**Table 1**

| | MIC | | MIC | |
|---|---|---|---|---|
| | *Pseudomonas aeruginosa* | *Pasteurella spp.* | *Staphylococcus epidermidis* | *Staphylococcus aureus* |
| QUAT | - | - | +/- | +/- |
| EDTA | - | - | +/- | + |
| Chloroform | - | - | +/- | +/- |
| Hydrogen peroxide | - | - | +/- | +/- |
| SDS | - | - | - | - |
| Peracetic acid | + | + | + | + |
| Glutaraldehyde | - | - | - | - |
| Lysozyme | + | + | + | + |

| | | | | |
|---|---|---|---|---|
| + : the microorganism is inhibited by the disinfectants (the MIC value is below 0.04%). = : the microorganism is not inhibited by the disinfectants (the MIC value is above 0.04%). +/- : the microorganism is initially inhibited, but, due to disintegration of the disinfectant, again gets a chance to grow. *Pseudomonas aeruginosa* and *Pasteurella spp.* belong to the "bad" flora *Staphylococcus epidermidis* and *Staphylococcus aureus* belong to the "good" flora | | | | |

**Table 2**

| | MBC | | MBC | |
|---|---|---|---|---|
| | *Pseudomonas aeruginosa* | *Pasteurella* | *Staphylococcus epidermidis* | *Staphylococcus aureus* |
| QUAT | - | - | - | - |
| EDTA | - | - | - | +/- |
| Chloroform | - | - | - | +/- |
| Hydrogen peroxide | - | - | - | - |
| SDS | - | - | - | - |
| Peracetic acid | + | + | + | + |
| Glutaraldehyde | - | - | - | - |
| Lysozyme | - | - | - | - |

| | | | | |
|---|---|---|---|---|
| + : the microorganism is killed by the disinfectants (the MIC value is below 0.04%). = : the microorganism is killed by the disinfectants (the MIC value is above 0.04%) +/- : a part of the flora is killed, but, due to disintegration of the disinfectant, the flora again gets a chance to grow. *Pseudomonas aeruginosa* and *Pasteurella spp.* belong to the "bad" flora *Staphylococcus epidermidis* and *Staphylococcus aureus* belong to the "good" flora | | | | |

**Table 3**

| Bed number | Activity lysozyme |
|---|---|
| 1A | + |
| 1B | - |
| 2 | - |
| 3 | - |
| 4 | - |
| 5 | - |
| 6A | - |
| 6B | +/- |
| 7 | + |
| 11A | - |
| 11B | - |
| 13 | - |
| 14A | - |
| 14B | - |
| 15A | - |
| 15B | - |
| 20 | - |
| 22A | +/- |
| 22B | - |
| 26A | - |
| 26B | - |

| | |
|---|---|
| + : lysozyme has reduced the "bad" flora by a factor 100 or more. - : lysozyme has not reduced the "bad" flora by a factor 100 or more. +/- : lysozyme has initially reduced the "bad" flora by a factor 100 or more, but after at least 60 days, an increase thereof can again be observed A/B : from twin beds | |

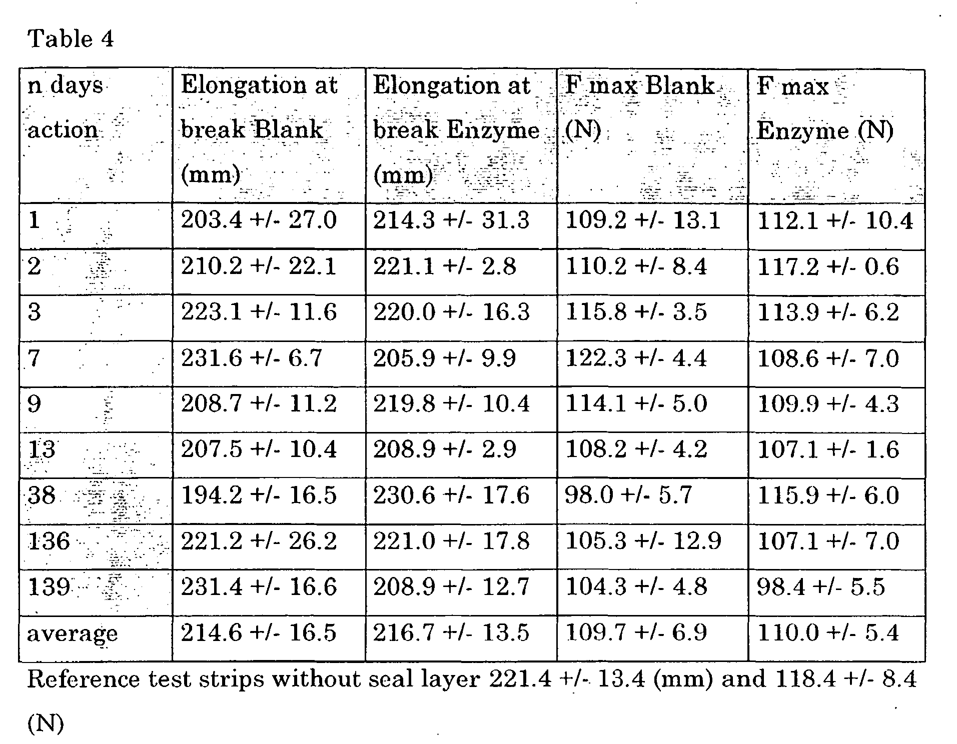

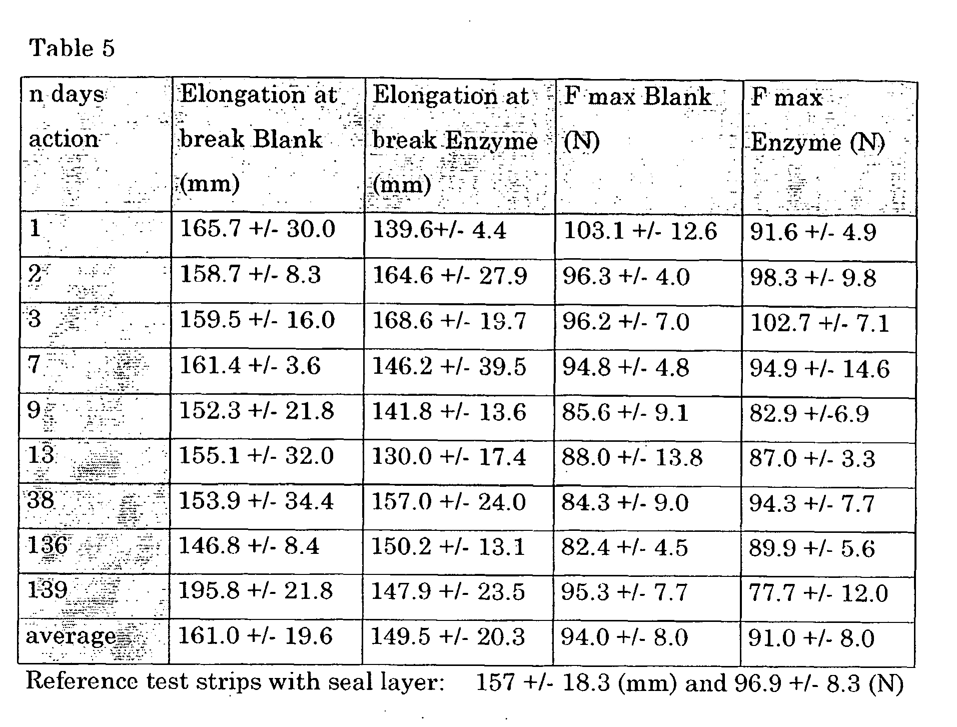

**Table 6A**

| BedID: 39 | | | | |
|---|---|---|---|---|
| Volume (liters): 120 | | | | |
| Analysis date | Test | Addition | Result | Note |
| 4-4-02 | Air formation | | Positive | slow gas former |
| 4-4-02 | pH | | 7.3 | |
| 4-4-02 | Hydrogen sulfide | | Negative | |
| 4-4-02 | Ammonia | | Positive | |
| 4-402 | Germ count (CFU/ml) | | 3.7*10^7 | Bacteria found: G-rods |
| 4-4-02 | Hardness (dh) Adding | Microconcentrate | 11 | |
| 25-4-02 | Hardness (dh) | | 11 | |
| 24-4-02 | pH | | 7.4 | |
| 24-5-02 | Germ count (CFU/ml) | | 1.5*10^7 | Bacteria found: G-rods- No G+ cocci found |
| 8-5-02 | pH Adding | Lysozyme (L) | 7.9 | |
| 8-5-02 | Germ count (CFU/ml) | | 1.4*10^7 | |
| 8-5-02 | Hardness (dh) | | 11 | |
| 6-6-02 | Germ count (CFU/ml) | | 8.4*10^6 | G-rods |
| 6-6-02 | Hardness (dh) | | 9 | |
| 6-6-02 | pH | | 7.9 | |
| 23-7-02 | Germ count (CFU/ml) | | 7.0*10^5 | |
| 24-7-02 | Adding | Microconcentrate | | microconcentrate, Chrys, strong. Bed has been pumped out |
| 24-7-02 | pH | | 8.1 | |
| 24-7-02 | Hardness (dh) | | 9 | |
| 24-7-02 | Germ count (CFU/ml) | | 1.0*10^4 | |
| 22-8-02 | Germ count (CFU/ml) | | 1.0*10^5 | not certain whether it contains Chrys; plates were difficult to read out |
| 4-9-02 | Germ count (CFU/ml) | | 1.0*10^6 | no Chrys found |
| 4-9-02 | Hardness (dh) | | 10 | |
| 4-9-02 | pH | | 7.2 | |
| 12-9-02 | pH | | 7.4 | |
| 12-9-02 | Germ count (CFU/ml) | | 4.0*10^4 | total germ count is 4.0*10^4, 6.0*10^1 of which is Chrys |
| 12-9-02 | Hardness (dh) | | 10 | |
| 3-10-02 | pH | | 7.1 | |
| 3-10-02 | Germ count (CFU/ml) | | 5.0*10^3 | total germ count is 5.0*10^3, 1.5*10^3 of which is Chrys |
| 3-10-02 | Hardness (dh) | | 12 | |
| 8-11-02 | pH | | 7.1 | |
| 8-11-02 | Germ count (CFU/ml) | | 3.5*10^3 | total germ count is 3.5* 10^3, 1.0*10^3 of which is Chrys. An increase from 20% to 35% |

**Table 6B**

| BedID: 47 | | | | |
|---|---|---|---|---|
| Volume (liters): 600 | | | | |
| Analysis date | Test | Addition | Result | Note |
| 19-6-02 | pH | | 7.5 | |
| 19-6-02 | Ammonia | | Positive | |
| 19-6-02 | Hardness (dh) | | 12 | |
| 19-6-02 | Air formation | | Negative | |
| 19-6-02 | Germ count (CFU/ml) Adding | Lysozyme (H) | 6.6*10^5 | |
| 19-6-02 | Hydrogen sulfide | | Positive (light) | |
| 27-6-02 | Hardness (dh) | | 7 | |
| 27-6-02 | pH | | 7.5 | |
| 27-6-02 | Air formation | | Negative | |
| 27-6-02 | Ammonia | | Positive | |
| 27-6-02 | Hydrogen sulfide | | Positive | |
| 27-6-02 | Germ count (CFU/ml) | | 8*10^4 | |
| 12-7-02 | Germ count (CFU/ml) | | 2.3*10^6 | |
| 12-7-02 | Hardness (dh) | | 8 | |
| 12-7-02 | pH | | 7.1 | |
| 24-7-02 | Hardness (dh) | | 8 | Microconcentrate added |
| 24-7-02 | Germ count (CFU/ml) | | 5*10^4 | |
| 24-7-02 | pH | | 7.0 | |
| 22-8-02 | Germ count (CFU/ml) | | 5.0*10^5 | total germ count is 5.0*10^5, approximately 2.0*10^4 of which is Chrys |
| 13-9-02 | Germ count (CFU/ml) | | 3.0*10^4 | |
| 13-9-02 | pH | | 7.3 | |
| 13-9-02 | Adding | Microconcentrate | | Bed has been pumped out and Chrys has been added |
| 13-9-02 | Hardness (dh) | | 10 | |
| 12-9-02 | pH | | 7.3 | |
| 12-9-02 | Germ count (CFU/ml) | | 2.0*10^4 | total germ count is 2.0*10^4, 4.0*10^2 of which is Chrys |
| 12-9-02 | Hardness (dh) | | 11 | |
| 3-10-02 | Germ count (CFU/ml) | | 6.0*10^4 | total germ count is 6.0*10^4, 1.0*10^4 of which is Chrys |
| 3-10-02 | Hardness (dh) | | 13 | |
| 3-10-02 | pH | | 7.1 | |
| 8-11-02 | Germ count (CFU/ml) | | 3.0*10^4 | total germ count is 3.0*10^3, 1.0*10^3 of which is Chryseomonas. A relative increase from 17% to 33% |
| 8-11-02 | pH | | 7.2 | |

**Table 6C**

| BedID: 55 | | | | |
|---|---|---|---|---|
| Volume (liters): 600 | | | | |
| Analysis date | Test | Addition | Result | Note |
| 22-8-02 | Germ count (CFU/ml) | | 1.7*10^6 | The first dilutions probably contain Chrys |
| 13-9-02 | Hardness (dh) | | 7 | |
| 13-9-02 | pH | | 7.4 | |
| 13-9-02 | Germ count (CFU/ml) | | 2.6*10^6 | total germ count is 2.6*10^6, 1.0*10^4 of which is Chrys. The conditioner was added directly after placing |
| 13-9-02 | Hardness (dh) | | 8 | |
| 13-9-02 | Germ count (CFU/ml) | | 1.4*10^6 | total germ count is 1.4*10^6, 3.0*10^3 of which is Chrys |
| 13-9-02 | pH | | 7.5 | |
| 3-10-02 | pH | | 7.4 | |
| 3-10-02 | Germ count (CFU/ml) | | 4.0*10^4 | total germ count is 4.0*10^4, 3.1*10^3 of which is Chrys |
| 3-10-02 | Hardness (dh) | | 8 | |
| 8-11-02 | Germ count (CFU/ml) | | 1.3*10^4 | total is 1.3*10^4, 3.0*10^3 of which is Chryseomonas. This is a relative increase from 10% to 30% |
| 8-11-02 | pH | | 7.4 | |

**Table 6D**

| BedID: 56 | | | | |
|---|---|---|---|---|
| Volume (liters): 290 | | | | |
| Analysis date | Test | Addition | Result | Note |
| 13-8-02 | Adding | Microncentrate | | |
| 22-8-02 | Germ count (CFU/ml) | | 9.0*10^5 | |
| 13-9-62 | Germ count (CFU/ml) | | 2.0*10^5 | total germ count is 2.0*10^5, approximately 5.0* 10^3 of which is Chrys |
| 13-9-02 | pH | | 7.6 | |
| 13-9-02 | Hardness (dh) | | 10 | |
| 12-9-02 | Hardness (dh) | | 11 | |
| 12-9-02 | Germ count (CFU/ml) | | 7.0*10^5 | total germ count is 7.0*10^5, 5.0*10^3 of which is Chrys |
| 12-9-02 | pH | | 7.5 | |
| 8-11-02 | pH | | 7.1 | |
| 8-11-02 | Germ count (CFU/ml) | | 2.9*10^4 | total germ count is 2.9*10^4, 6.0*10^3 of which is Chryseomonas. A relative increase from 0.7% to 20% |

**Table 6E**

| BedID: 57 | | | | |
|---|---|---|---|---|
| Volume (liters): 250 | | | | |
| Analysis date | Test | Addition | Result | Note |
| 10-8-02 | Adding | Microconcentrate | | New bed, Chrys added directly |
| 22-8-02 | Germ count (CFU/ml) | | 1.7*10^4 | |
| 13-9-02 | pH | | 7.4 | |
| 13-9-02 | Germ count (CFU/ml) | | 1.8*10^4 | no Chrys found |
| 12-9-02 | Hardness (dh) | | 8 | |
| 12-9-02 | Germ count (CFU/ml) | | 1.6*10^5 | total germ count is 1.6*10^5, 1.0*10^4 of which is probably Chrys |
| 12-9-02 | pH | | 7.6 | |
| 8-11-02 | pH | | 7.2 | |
| 8-11-02 | Germ count (CFU/ml) | | 2.7*10^4 | total germ count is 2.7*10^A, 1.0*10^4 of which is Chryseomonas. A relative increase from 10% to 30% |

**Table 6F**

| BedID: 58 | | | | |
|---|---|---|---|---|
| Volume (liters): 290 | | | | |
| Analysis date | Test | Addition | Result | Note |
| 13-8-02 | Adding | Microconcentrate | | |
| 22-8-02 | Germ count (CFU/ml) | | 3.0*10^6 | |
| 13-9-02 | Germ count (CFU/ml) | | 1.0*10^5 | mainly Chrys found |
| 13-9-02 | pH | | 7.0 | |
| 13-9-02 | pH | | 7.2 | |
| 13-9-02 | Germ count (CFU/ml) | | 1.2*10^6 | total germ count is 1.2*10^6, 2.0*10^2 of which is Chrys |
| 13-9-02 | Hardness (dh) | | 12 | |
| 8-11-02 | pH | | 6.6 | |
| 8-11-02 | Germ count (CFU/ml) | | 1.7*10^5 | total germ count is 1.7*10^5, 3.0*10^3 of which is Chryseomonas. A relative increase from 0.02% to 2%. Bed starts to catch on |

**Table 6G**

| BedID: 59 | | | | |
|---|---|---|---|---|
| Volume (liters): 100 | | | | |
| Analysis date | Test | Addition | Result | Note |
| 13-9-02 | Germ count (CFU/ml) | | 2.8*10^6 | total germ count is 2.8*10^6, 2.0*10^5 of which is Chrys |
| 13-9-02 | pH | | 7.3 | |
| 4-9-02 | Adding | Microconcentrate | | |
| 12-9-02 | Hardness (dh) | | 10 | |
| 12-9-02 | Germ count (CFU/ml) | | 3.2*10^6 | total germ count is 3.2*10^6, 2.0*10^5 of which is Chrys |
| 12-9-02 | pH | | 7.5 | |
| 3-10-02 | Hardness (dh) | | 11 | |
| 3-10-02 | Germ count (CFU/ml) | | 3.0*10^6 | total germ count is 3.0*10^6, 1.0*10^4 of which is Chrys |
| 3-10-02 | pH | | 7.2 | |
| 8-11-02 | pH | | 7.2 | |
| 8-11-02 | Germ count (CFU/ml) | | 6.0*10^4 | total germ count is 6.0*10^4, 7.0*10^3 3 of which is Chryseomonas. A relative increase from 0.3% to 10% |

**Table 6H**

| BedID: 60 | | | | |
|---|---|---|---|---|
| Volume (liters): 100 | | | | |
| Analysis date | Test | Addition | Result | Note |
| 13-9-02 | Hardness (dh) | | 10 | |
| 13-9-02 | Germ count (CFU/ml) | | 1.0*10^7 | for the most part Chrys, is full up! |
| 4-9-02 | Adding | Microconcentrate | | |
| 13-9-02 | pH | | 7.4 | |
| 13-9-02 | pH | | 7.2 | |
| 13-9-02 | Hardness (dh) | | 11 | |
| 13-9-02 | Germ count (CFU/ml) | | 4.0*10^6 | total germ count is 4.0*10^6, 1.7* 10^4 of which is Chrys |
| 3-10-02 | pH | | 7.2 | |
| 3-10-02 | Hardness(dh) | | 11 | |
| 3-10-02 | Germ count (CFU/ml) | | 1.9*10^7 | total germ count is 1.9*10^7, 3.0*10^3 of which is Chrys |
| 8-11-02 | pH | | 7.0 | |
| 8-11-02 | Germ count (CFU/ml) | | 5.0*10^5 | total germ count is 5.0*10^5, 2.0*10^4 of which is Chryseomonas. A relative increase from <0.01% to 4%. Bed seems to catch on now |

**Table 6I**

| BedID:61 | | | | |
|---|---|---|---|---|
| Volume (liters): 250 | | | | |
| Analysis date | Test | Addition | Result | Note |
| 3-10-02 | Hardness (dh) | | 11 | |
| 3-10-02 | pH | | 7.1 | |
| 3-10-02 | Adding | Microconcentrate | | Microconcentrate added on 10-9-02 |
| 3-10-02 | Germ count (CFU/ml) | | 4.0*10^4 | total germ count is 4.0*10^4, 1.0*10^4 of which is Chrys |
| 8-11-02 | Germ count (CFU/ml) | | 2.5*10^4 | total germ count is 2.5*10^4, 1.0*10^4 of which is Chryseomonas. An increase from 25% to 40% |
| 8-11-02 | pH | | 7.2 | |

## Claims

1. A method for regulating the quality of water in a waterbed, comprising adding to the water in the waterbed a microorganism, belonging to the genus *Chryseomonas* spp. which is able to reduce the amount of second microorganisms present in a waterbed, said second microorganisms being fermenting microorganisms.

2. The method of claim 1 wherein the second microorganisms can produce CO₂ H₂S or ammonia.

3. The method of any one of the preceding claims wherein the second microorganism belong to the genus *Staphylococcus* spp., *Serratia* spp., *Stenotrophomonas* spp., *Escherichia* spp., *Pasteurella* spp., *Bacillus* spp., *Enterococcus* spp. or *Enterobacter* spp. .

4. Use of first microorganisms as defined in claim 1in a waterbed conditioner or to regulate the quality of water in a waterbed.

## Patentansprüche

1. Verfahren zum Regulieren der Qualität von Wasser in einem Wasserbett, umfassend das Hinzufügen eines Mikroorganismus, der zur Gattung *Chryseomonas* gehört und der die Menge von zweiten Mikroorganismen, die in einem Wasserbett vorhanden sind, reduzieren kann, zu dem Wasser in dem Wasserbett, wobei die zweiten Mikroorganismen fermentierende Mikroorganismen sind.

2. Verfahren gemäß Anspruch 1, wobei die zweiten Mikroorganismen CO₂, H₂S oder Ammoniak produzieren können.

3. Verfahren gemäß einem der vorstehenden Ansprüche, wobei die zweiten Mikroorganismen zur Gattung *Staphylococcus, Serratia, Stenotrophomonas, Escherichia, Pasteurella, Bacillus, Enterococcus* oder *Enterobacter* gehören.

4. Verwendung von ersten Mikroorganismen, wie sie in Anspruch 1 definiert sind, in einem Wasserbett-Konditionierer oder zum Regulieren der Qualität von Wasser in einem Wasserbett.

## Revendications

1. Procédé de régulation de la qualité de l'eau dans un lit à eau, comprenant l'addition à l'eau dans le lit à eau d'un microorganisme appartenant au genre *Chryseomonas* spp. qui est capable de réduire la quantité de seconds microorganismes présents dans un lit à eau, lesdits seconds microorganismes étant des microorganismes fermentants.

2. Procédé selon la revendication 1, où les seconds microorganismes peuvent produire du CO₂, du H₂S ou de l'ammoniac.

3. Procédé selon l'une quelconque des revendications précédentes, où les seconds microorganismes appartiennent au genre *Staphylococcus* spp. *Serratia* spp., *Stenotrophomonas* spp., *Escherichia* spp., *Pasteurella* spp., *Bacillus* spp., *Enterococcus* spp. ou *Enterobacter* spp.

4. Utilisation des premiers microorganismes selon la revendication 1 dans un agent de conditionnement de lit à eau ou pour réguler la qualité de l'eau dans un lit à eau.
